# EUROPÄISCHE PATENTSCHRIFT

(11) **EP 3 574 188 B1**
(45) Veröffentlichungstag und Bekanntmachung des Hinweises auf die Patenterteilung: **28.02.2024**
(21) Anmeldenummer: 18714151.0
(22) Anmeldetag: 12.03.2018
(51) Int. Cl.: F01D 5/00, F01D 11/02, F01D 11/08, B23P 6/00, F16J 15/447, F01D 25/24, F01D 5/22

(54) **VERFAHREN ZUR ABDICHTUNG EINES RINGSPALTES IN EINER TURBINE SOWIE TURBINE**
METHOD FOR SEALING AN ANNULAR GAP IN A TURBINE, AND TURBINE
PROCÉDÉ PERMETTANT DE FERMER DE MANIÈRE ÉTANCHE UN INTERSTICE ANNULAIRE DANS UNE TURBINE AINSI QUE TURBINE

(30) Priorität: 05.04.2017 DE 102017205794
(43) Veröffentlichungstag der Anmeldung: 04.12.2019
(73) Patentinhaber: Siemens Energy Global GmbH & Co. KG, 81739 München (DE)
(72) Erfinder: BRAUKMANN, Wolfgang, 45289 Essen (DE); STANKA, Ulrich, 45355 Essen (DE)
(86) Internationale Anmeldenummer: PCT/EP2018/056006
(87) Internationale Veröffentlichungsnummer: WO 2018/184788

(56) Entgegenhaltungen:
- EP-A1- 2 853 685
- EP-A1- 2 857 639
- EP-A1- 2 873 812
- GB-A- 767 656
- US-A- 4 816 213
- US-A- 5 501 573
- US-A1- 2008 175 706

## Beschreibung

Die Erfindung betrifft ein Verfahren zur Abdichtung eines Ringspaltes in einer Turbine mit einem Gehäuse und einem in dem Gehäuse angeordneten, um seine zentrale Längsachse drehbar gelagerten und mit mehreren Stufen von Laufschaufeln bestückten Rotor. Darüber hinaus betrifft die Erfindung eine Turbine.

Zur Erzielung eines möglichst hohen Wirkungsgrades von Turbinen, beispielsweise Dampfturbinen, gilt es, Verluste soweit wie möglich zu reduzieren. Verluste können im Bereich des Strömungskanals, u.a. in denjenigen Ringspalten auftreten, die jeweils zwischen den Spitzen der Schaufeln einer Laufschaufelstufe des Rotors und dem diesen radial gegenüberliegenden Wandungsbereich des Strömungskanals gebildet werden. Eine Abdichtung dieser Ringspalte erfolgt beispielsweise mittels berührungsloser Labyrinth- oder Spitze-Spitze-Dichtungen, die von den Spitzen der Laufschaufeln radial nach außen abragende Schneiden und von den gegenüberliegenden Wandungsbereichen radial nach innen abragende Dichtbänder umfassen. Durch die Anordnung von Schneiden und Dichtbändern wird eine Durchströmung der Ringkanäle unterbunden bzw. zumindest reduziert.

Der Anmelderin ist bekannt, dass für die Befestigung von Dichtbändern sich in Umfangsrichtung erstreckende Dichtbandnuten in den den Laufschaufelspitzen gegenüberliegenden Wandungsbereichen vorgesehen sind, in die jeweils ein L-förmig umgebogener Endbereich eines - ebenfalls umlaufenden - Dichtbandes eingesetzt und mittels eines Stemmdrahtes fixiert wird.

Insbesondere bei Einsatz von nicht erosions-korrosions-beständigem Stahl im Schaufelpfad in Verbindung mit erhöhter Dampfnässe können Dichtungsbereiche der Lauf- und Leitbeschaufelung ausgewaschen und insbesondere die mittels Stemmdrähten befestigten Dichtbänder aus den Dichtbandnuten gelöst werden. Eine Wiederherstellung der ursprünglichen Abdichtung der Ringkanäle stellt sich in diesem Falle schwierig dar, insbesondere, da erodierte Dichtbandnuten aufgrund von Fehlmaterial in der Regel nicht neu bebändert werden können.

Die US 5 501 573 A offenbart eine Turbine mit einem mittels eines Einsatzringes abgedichteten Ringspaltes.

Weitere Gasturbinen dieser Art gehen hervor aus den Dokumenten US 2008/0175706 A1, US 4 816 213 A, GB 767 656 A und EP 2 873 812 A1

Die EP 2 857 639 A1 offenbart einen Dichtungsring und eine Gasturbine mit einem solchen.

Aus der EP 2 853 685 A1 geht eine Turbine mit einem Einsatzelement hervor. Durch Entfernen des Einsatzelementes kann die Turbine auf einfache Weise von einem Betrieb mit einer Laufschaufelreihe ohne Deckband auf einen Betrieb mit einer Laufschaufelreihe mit Deckband umgerüstet werden.

Ausgehend davon ist es eine Aufgabe der vorliegenden Erfindung, ein Verfahren zur Abdichtung eines Ringspaltes in einer Turbine bereitzustellen, welches sich mit vergleichsweise geringem Aufwand durchführen lässt, eine gute Abdichtung der Ringspalte und somit hohen Wirkungsgrad der Turbine gewährleistet und sich insbesondere auch zur Wiederherstellung der Abdichtung bei Beschädigungen im Bereich von Ringspalten eignet.

Diese Aufgabe wird gelöst durch ein Verfahren nach Anspruch 1. Bei dem Verfahren wird
a) eine ringförmige, zu dem Rotor koaxiale und den Spitzen der Laufschaufeln einer Stufe gegenüberliegende Vertiefung in dem Gehäuse oder in wenigstens einem an dem Gehäuse befestigten Element bereitgestellt,
b) ein insbesondere geteilter Einsatzring, der derart ausgebildet ist, dass er in die Vertiefung mit Spiel formschlüssig einsetzbar ist, bereitgestellt,
c) der Einsatzring in die Vertiefung eingesetzt, indem der Einsatzring im Wesentlichen in axialer Richtung in die Vertiefung eingeschoben wird, und
d) der Einsatzring mit Befestigungselementen derart fixiert wird, dass eine zumindest im Wesentlichen axial gerichtete Spannkraft mittels der Befestigungselemente aufgebracht, wobei ein Einsatzring bereitgestellt wird, der insbesondere stirnseitig einen konischen und insbesondere ringförmigen Dichtabschnitt aufweist, der sich in Richtung eines axialen Endes des Einsatzringes hin verjüngt, und wobei eine Vertiefung hergestellt wird, die einen Aufnahmeabschnitt umfasst, dessen Innenkontur an die Außenkontur des Dichtabschnittes des Einsatzringes insbesondere mit Spiel angepasst ist, und ein konischer Sitz erhalten wird.

Das erfindungsgemäße Verfahren wird in besonders bevorzugter Ausführungsform zur Reparatur einer Turbine durchgeführt, die wenigstens einen beschädigten Dichtungsbereich aufweist. Dann wird in Schritt a) die Vertiefung in dem Gehäuse oder wenigstens einen an dem Gehäuse direkt oder indirekt befestigten Element durch ein materialabtragendes Verfahren hergestellt. Die hergestellte Vertiefung erstreckt sich über einen Bereich an dem Gehäuse oder wenigstens einen an diesem direkt oder indirekt befestigten Element, an dem vor der Materialentfernung Beschädigungen vorlagen. Beispielsweise können die Beschädigungen in Form von erodierten Dichtbandnuten, aus denen die Dichtbänder herausgelöst wurden, vorliegen und die Dichtbandnuten werden im Rahmen der Herstellung der Vertiefung insbesondere vollständig entfernt.

In weiterer besonders vorteilhafter Ausführungsform des erfindungsgemäßen Verfahrens wird ein Einsatzring bereitgestellt, der an seiner im montierten Zustand den Laufschaufelspitzen zugewandten inneren Mantelfläche eine Mehrzahl von Dichtbändern aufweist, die insbesondere in radialer Richtung von dem Einsatzring abragen und/oder sich in Umfangsrichtung des Einsatzringes erstrecken. Für die Befestigung der Dichtbänder sind dann bevorzugt sich in Umfangsrichtung erstreckenden Dichtbandnuten in dem Einsatzring vorgesehen, in denen jeweils ein umlaufendes Dichtband beispielsweise mittels eines Stemmdrahtes fixiert ist.

Erfindungsgemäß wird zur Abdichtung des Ringspaltes einer Laufschaufelstufe ein Einsatzring verwendet, der den Schaufelspitzen einer Laufschaufelstufe gegenüberliegend angeordnet wird und im Betrieb deren Reibpartner bildet. Der bereitgestellte Einsatzring ist bevorzugt aus einem erosionskorrosionsbeständigen Material, beispielsweise X3CrNiMo13-4 gefertigt. Der Einsatzring wird in einer bereitgestellten bzw. erzeugten ringförmigen Vertiefung angeordnet und fixiert, wobei zur Fixierung erfindungsgemäß Befestigungselemente zum Einsatz kommen, mittels denen der Einsatzring axial gegen das Gehäuse bzw. das wenigstens eine an dem Gehäuse befestigte Element verspannt wird. In die Vertiefung wird der Einsatzring bevorzugt eingesetzt, indem er in zumindest im Wesentlichen axialer Richtung in diese eingeschoben wird. Entsprechend wird bevorzugt eine Vertiefung bereitgestellt, die ein axiales Einschieben in die bestimmungsgemäße Position in der Vertiefung ermöglicht, insbesondere keine dem entgegenstehende Hinterschneidungen aufweist. Eine solche Vertiefung zeichnet sich durch eine einfache Drehkontur aus und kann sich somit unter vergleichsweise geringem Aufwand herstellen lassen. Im Falle der Reparatur ersetzt der Einsatzring zuvor entferntes beschädigtes Material und die ursprüngliche, effiziente Dichtwirkung kann vollumfänglich wiederhergestellt werden. Einsatzring und/oder Vertiefung können insbesondere rotationssymmetrisch sein.

Die erfindungsgemäße axiale Fixierung verhindert durch definiert zur Anlage gebrachte Dichtflächen zuverlässig ein Hinterspülen der hinter dem Einsatzring liegenden Kontur, die insbesondere nicht aus erosionskorrosionsbeständigem Material besteht. Gegenüber anderen Befestigungsmöglichkeiten des Einsatzringes, beispielsweise einer radialen Verschraubung und/oder einer Befestigung über Schwalbenschwanz-, oder T-förmige Befestigungsnuten, hat die erfindungsgemäße Vorgehensweise weiterhin den großen Vorteil, dass keinerlei Unterbrechungen der den Laufschaufelspitzen zugewandten inneren Mantelfläche des Einsatzringes für Befestigungselemente vorliegen müssen und die Segmentierung des Einsatzringes auf eine minimale Anzahl, insbesondere korrespondierend zu einem Turbinengehäuse mit einer oberen und unteren Hälfte auf nur zwei Ringsegmente begrenzt werden kann. Im Ergebnis werden auch hierdurch Leckagen oder Hinterspülungen zuverlässig vermieden.

Das Einsetzen des insbesondere zweigeteilten Ringes in die Vertiefung in axialer Richtung ist ferner weniger aufwendig als zum Beispiel ein Einschieben einer Vielzahl von Ringsegmenten in Umfangsrichtung in etwa T- oder Schwalbenschwanzförmige Befestigungsnuten. Die mit einem solchen Einschieben verbundene Gefahr eines Verkeilens oder "Fressens" wird zuverlässig vermieden.

Da in den insbesondere nur zwei Einsatzringsegmenten jeweils keine Unterbrechungen in der inneren Mantelfläche vorliegen, steht ferner die gesamte Fläche zur Verfügung, um Dichtbänder, beispielsweise mittels zu diesem Zweck vorgesehener Dichtbandnuten, zu befestigen. Im Falle einer Reparatur, insbesondere Sanierung von erosions-korrosions-beschädigten Laufschaufelabdichtungen, kann wieder die ursprünglich vorhandene Anzahl von Dichtbändern vorgesehen werden.

Ein weiterer Vorteil des erfindungsgemäßen Vorgehensweise besteht darin, dass die axial orientierten Befestigungselemente geschützt außerhalb der unmittelbar beströmten Fläche liegen, wodurch eine besonders zuverlässige Fixierung des Einsatzringes gewährleistet ist. Da außerhalb des unmittelbar beströmten Bereiches günstigere Platzverhältnisse vorliegen können ferner Schraubensicherungseinrichtungen zum Einsatz kommen.

Für eine Reparatur einer Turbine wird zweckmäßiger Weise ein Einsatzring bereitgestellt, der derart ausgebildet ist, dass er die Ursprungsgeometrie des Gehäuses oder des wenigstens einen an dem Gehäuse befestigten Elementes zumindest teilweise wieder herstellt, wenn er in die Vertiefung eingesetzten ist.

Das Verfahren kann alternativ zu einer Reparatur selbstverständlich auch für die Neufertigung einer Turbine zum Einsatz kommen. Dann wird bereits im Rahmen der Herstellung der Turbine den Spitzen der Schaufeln wenigstens einer Laufschaufelstufe der Turbine gegenüberliegend erfindungsgemäß ein Einsatzring vorgesehen. Dieser kann dann bei späterer Beschädigung besonders einfach ausgetauscht werden. Darüber hinaus bietet die Durchführung des erfindungsgemäßen Verfahrens bereits bei Herstellung den Vorteil einer Kostenersparnis, dies insbesondere, wenn Erosionsbeständigkeit gefordert ist, da ein entsprechend höherwertiges Material gezielt für den Einsatzring zum Einsatz kommen kann, im Bereich übriger Komponenten, beispielsweise im Bereich hinter dem Einsatzring, auf das höherwertige Material jedoch verzichtet werden kann.

Die Vertiefung für den Einsatzring befindet sich - je nach Aufbau der Turbine - beispielsweise unmittelbar in dem Turbinengehäuse. Liegt den Spitzen der Laufschaufeln nicht ein Teil des Gehäuses selber gegenüber, sondern eines oder auch mehrere Elemente, die an dem Gehäuse befestigt sind, so wird die Vertiefung erfindungsgemäß in diesem einen oder diesen mehreren Elementen bereitgestellt. Bei dem wenigstens einen an dem Gehäuse direkt oder indirekt befestigten Element kann es sich beispielsweise um einen ein- oder mehrteiligen Leitschaufelkranz handeln, an welchem bevorzugt sämtliche Leitschaufeln wenigstens einer Leitschaufelstufe der Turbine befestigt sind.

Die Vertiefung wird in bevorzugter Ausgestaltung in einem Bereich des Gehäuses oder wenigstens einen daran befestigten Elementes bereitgestellt, in welchem eine stufenartige Veränderung des Innendurchmessers des Gehäuses oder wenigstens einen Elementes vorliegt. In diesem Falle kann auf einfache Weise eine Form erhalten werden, die ein axiales Einsetzen des Einsatzringes in die Vertiefung ermöglicht, da eine Vertiefung an der Stelle einer Stufe in axialer Richtung zumindest an einer Seite offen ist.

Das Turbinengehäuse umfasst in der Regel eine obere und eine untere Hälfte, und der Einsatzring ist, insbesondere aus Montagezwecken, bevorzugt zu der Gehäuseteilung korrespondierend geteilt. Entsprechend ist der Einsatzring insbesondere unter Bildung genau einer Teilfuge in genau zwei bevorzugt gleichgroße Teile unterteilt. Eine darüber hinausgehende Unterteilung des Einsatzringes ist im Rahmen des erfindungsgemäßen Verfahrens in der Regel nicht erforderlich, wenngleich möglich. Die Anzahl der Einsatzringsegmente gering zu halten ist jedoch zur Vermeidung von Unterbrechungen und dem damit verbundenen Risiko von Hinterspülungen zweckmäßig.

Bei den Befestigungselementen, die bevorzugt länglich ausgebildet sind, handelt sich beispielswiese um Schrauben und/oder Gewindestanden und/oder Bolzen, wobei Schrauben bevorzugt sind. Die länglichen Befestigungselemente werden bevorzugt zumindest im Wesentlichen in axialer Richtung in den Einsatzring, insbesondere in zumindest im Wesentlichen axial orientierte Durchgangsbohrungen in dem Einsatzring eingesetzt und erstrecken sich im montierten Zustand entsprechend durch diesen.

In weiterer Ausführungsform des erfindungsgemäßen Verfahrens ist entsprechend vorgesehen, dass ein Einsatzring bereitgestellt wird, in dem mehrere in Umfangsrichtung beabstandete, zumindest im Wesentlichen axial orientierte Durchgangsbohrungen für je ein längliches Befestigungselement vorgesehen sind, und insbesondere in dem Gehäuse oder wenigstens einen an dem Gehäuse befestigten Element mehrere zumindest im Wesentlichen axial orientierte Gewindebohrungen vorgesehen werden, die derart angeordnet sind, dass sie mit den Durchgangsbohrungen in dem Einsatzring fluchten, wenn der Einsatzring bestimmungsgemäß in die Vertiefung eingesetzt ist. Die Gewindebohrungen werden insbesondere nach der Herstellung der Vertiefung gefertigt. Sie münden ferner vorteilhafter Weise in den Bereich der Vertiefung. Die Durchgangsbohrungen in dem Einsatzring sind bevorzugt als Senkbohrungen ausgebildet. Kommen Schrauben als Befestigungselemente zum Einsatz, werden dann auch deren Köpfe in an sich bekannter Weise von den Durchgangsbohrungen aufgenommen.

Um eine besonders zuverlässige Fixierung des Einsatzringes zu gewährleisten, kann vorgesehen sein, dass die Befestigungselemente jeweils mit einer Sicherungseinrichtung gesichert werden. Die Sicherungseinrichtungen umfassen bevorzugt jeweils wenigstens eine Keil-Sicherungsscheibe. Als besonders zweckmäßig hat es sich erwiesen, wenn zwei Keil-Sicherungsscheiben zum Einsatz kommen, die in demjenigen Falle, dass als längliche Befestigungselemente Schrauben verwendet werden, in an sich bekannter Weise wie Unterlegscheiben unter den Köpfen der Schrauben angeordnet werden.

Bei dem erfindungsgemäßen Verfahren wird ein Einsatzring bereitgestellt, der einen konischen Dichtabschnitt aufweist, welcher sich in Richtung eines axialen Endes des Einsatzringes hin verjüngt. Es wird eine Vertiefung bereitgestellt bzw. hergestellt, die einen Aufnahmeabschnitt umfasst, dessen Innenkontur an die Außenkontur des Dichtabschnittes des Einsatzringes insbesondere mit Spiel angepasst ist. Der konische Dichtabschnitt ist insbesondere ringförmig und/oder stirnseitig an dem Einsatzring vorgesehen. Ist der Dichtabschnitt ringförmig, weist er insbesondere wenigstens eine sich in Richtung eines axialen Endes des Einsatzringes hin konisch verjüngenden Mantelfläche auf. Die erfindungsgemäße axiale Fixierung in Verbindung mit einem konischen Sitz gemäß dieser bevorzugten Ausführungsform erlaubt einerseits eine besonders zuverlässige Verspannung des Einsatzringes auf ganzer Länge und Breite. Über die geneigte Fläche oder geneigten Flächen des konischen Sitzes wird ferner eine definierte, besonders zuverlässige Abdichtung erreicht. Wird der konische Dichtabschnitt aufgrund der erfindungsgemäß axialen Verspannung in axialer Richtung in den - bevorzugt mit Spiel - korrespondierend geformten Aufnahmebereich der Vertiefung geschoben, wird der Dichtabschnitt aufgrund der geneigten Fläche auch in radialer Richtung gegen eine Wandung des Aufnahmebereichs gedrückt und eine gute Dichtung erzielt. Eine Hinterströmung des Einsatzringes wird im Ergebnis besonders zuverlässig vermieden.

Es können weiterhin eine Vertiefung und ein Einsatzring bereitgestellt werden, die derart korrespondierend zueinander ausgebildet sind, dass zwischen zumindest im Wesentlichen radial ausgerichteten Anschlagflächen von Vertiefung und Einsatzring ein vorgegebenes Spiel besteht.

Das erfindungsgemäße Verfahren eignet sich auch für Ringspalte großen Durchmessers und es können auch Einsatzringe schlanker Bauweise Verwendung finden. Die Ringspaltdurchmesser können beispielsweise im Bereich von 2 bis 4 m, insbesondere 3 bis 3,5 m liegen. Einsatzringe mit einer vergleichsweise hohen Ausdehnung in axialer Richtung, also vergleichsweise breite Einsatzringe können ebenfalls - insbesondere bei einer Fixierung durch axiale Verspannung in Kombination mit einem konischem Dichtabschnitt - zum Einsatz kommen, wobei auch in diesem Falle eine zuverlässige Fixierung erzielt wird. Die Breite des Einsatzringes kann beispielsweise im Bereich von 80 bis 120 cm liegen.

In Weiterbildung des Verfahrens kann ferner vorgesehen sein, dass ein Einsatzring bereitgestellt wird, der derart ausgebildet ist, dass der Dichtabschnitt in axialer Richtung beabstandet zu denjenigen Stellen liegt, an denen die Einleitung der Spannkraft über die Befestigungselemente erfolgt. Bevorzugt liegt der Dichtabschnitt an oder nahe des einen axialen Endes des Einsatzringes und diejenigen Stellen, über welche die axiale Spannkraft eingeleitet wird bevorzugt an oder nahe des anderen, gegenüberliegenden axialen Endes. Wird der Einsatzring mittels Schrauben fixiert, die in zumindest im Wesentlichen axiale Durchgangsbohrungen in dem Einsatzring eingesetzt werden, die Anschlagflächen für die Schraubenköpfe aufweisen, sind insbesondere der Dichtabschnitt und die Anschlagflächen der Durchgangsbohrungen in axialer Richtung beabstandet zueinander, besonders bevorzugt jeweils an oder nahe gegenüberliegenden axialen Enden des Einsatzringes vorgesehen.

Darüber hinaus kann ein Einsatzring bereitgestellt werden, der im Axialschnitt zumindest in etwa L-förmig ist und einen sich zumindest im Wesentlichen in axialer Richtung erstreckenden, bevorzugt längeren, und einen sich zumindest im Wesentlichen in radialer Richtung erstreckenden, bevorzugt kürzeren Schenkel aufweist. Dann sind Durchgangsbohrungen insbesondere in dem einen, bevorzugt in dem sich zumindest im Wesentlichen in radialer Richtung erstreckenden Schenkel vorgesehen, und erstrecken sich insbesondere zumindest im Wesentlichen parallel zu dem anderen Schenkel. Bevorzugt wird alternativ oder zusätzlich eine im Axialschnitt zumindest in etwa L-förmige Vertiefung bereitgestellt.

Weiterhin kann der Dichtabschnitt durch den axialen Endbereich des sich zumindest im Wesentlichen in radialer Richtung erstreckenden Schenkels gebildet werden oder an den sich zumindest im Wesentlichen in radialer Richtung erstreckenden Schenkel, insbesondere an dessen äußere Mantelfläche angeformt sein.

Es kann in Weiterbildung vorgesehen sein, dass ein Einsatzring bereitgestellt wird, der eine sich in Umfangsrichtung erstreckende Entwässerungsrinne aufweist, wobei die Entwässerungsrinne insbesondere derart angeordnet ist, dass ihre offene, obere Seite radial nach außen weist. In Einsatzring mit Entwässerungsrinne ist insbesondere im Rahmen einer Reparatur zweckmäßig, wenn in demjenigen Bereich, welcher zur Herstellung der Vertiefung entfernt wurde, zuvor bereits eine Entwässerungsrinne vorgesehen war, die es zu ersetzen gilt.

Eine weitere Ausführungsform zeichnet sich schließlich dadurch aus, dass ein Einsatzring bereitgestellt wird, der hergestellt wurde, indem zunächst ein einteiliger Einsatzring-Rohling gefertigt und der einteilige Einsatzring-Rohling unter Bildung wenigstens einer Teilfuge in wenigstens zwei insbesondere gleichgroße Einsatzringteile unterteilt wurde. Diese Vorgehensweise hat sich als besonders zweckmäßig erwiesen. Dann ist bevorzugt vorgesehen, dass der Durchmesser des bereitgestellten Einsatzringes den Durchmesser der hergestellten Vertiefung um einen vorgegebenen Wert überschreitet. Dies dient dem Zweck, einen mit der nachträglichen mechanischen Teilung des zunächst geschlossen gefertigten Einsatzring-Rohlings verbundenen Materialverlust zu kompensieren. Es kann bestimmt bzw. abgeschätzt werden, wie groß der Materialverlust aufgrund des zum Einsatz kommenden Verfahrens für die Teilung konkret ist und der Ringdurchmesser kann entsprechend größer dimensioniert werden. Beim Einsatz in die Vertiefung wird der einen leicht größeren Durchmesser aufweisende Einsatzring dann leicht kleiner gebogen, um in die Vertiefung eingesetzt, bevorzugt in axialer Richtung in diese eingeschoben werden zu können.

Ein weiterer Gegenstand der Erfindung ist eine Turbine umfassend wenigstens einen Ringspalt, der unter Durchführung des erfindungsgemäßen Verfahrens abgedichtet ist. Dabei kann es sich sowohl um eine Turbine handeln, im Rahmen deren Neufertigung einer oder mehrere Ringspalte unter Durchführung des erfindungsgemäßen Verfahrens abgedichtet wurde(n) oder um eine Turbine, bei der das erfindungsgemäße Verfahren zur Reparatur, insbesondere Wiederherstellung einer Abdichtung des einen oder der mehreren Ringspalte durchgeführt wurde.

Weitere Merkmale und Vorteile der vorliegenden Erfindung werden anhand der nachfolgenden Beschreibung einer Ausführungsform des erfindungsgemäßen Verfahrens zum Abdichten eines Ringspaltes einer Turbine unter Bezugnahme auf die beiliegende Zeichnung deutlich. Darin ist:
- Fig. 1: einen schematischen axialen Teilschnitt durch die Niederdruck-Stufe einer Dampfturbine, bei welcher die Leitschaufeln direkt am Gehäuse gehalten sind;
- Fig. 2: eine vergrößerte Darstellung eines Ausschnitts aus Figur 1;
- Fig. 3: den Teilschnitt aus Figur 1, wobei den Spitzen der ersten Laufschaufelstufe radial gegenüberliegend ein Einsatzring gemäß einer ersten Ausführungsform angeordnet ist;
- Fig. 4: eine vergrößerte Darstellung eines Ausschnitts aus Figur 2;
- Fig. 5: einen schematischen axialen Teilschnitt durch die Niederdruck-Stufe einer weiteren Dampfturbine, bei welcher die Leitschaufeln an Leitschaufelkränzen gehalten sind, die an dem Gehäuse befestigt sind;
- Fig. 6: den Teilschnitt aus Figur 4, wobei den Spitzen der dargestellten Laufschaufelstufe radial gegenüberliegend ein Einsatzring gemäß einer zweiten Ausführungsform angeordnet ist;
- Fig. 7: eine vergrößerte Schnittdarstellung des Einsatzringes aus Figur 5; und
- Fig. 8: eine vergrößerte axiale Schnittdarstellung einer dritten Ausführungsform eines Einsatzringes, der in einer weiteren Dampfturbine den Spitzen der dargestellten Laufschaufelstufe radial gegenüberliegend angeordnet ist.

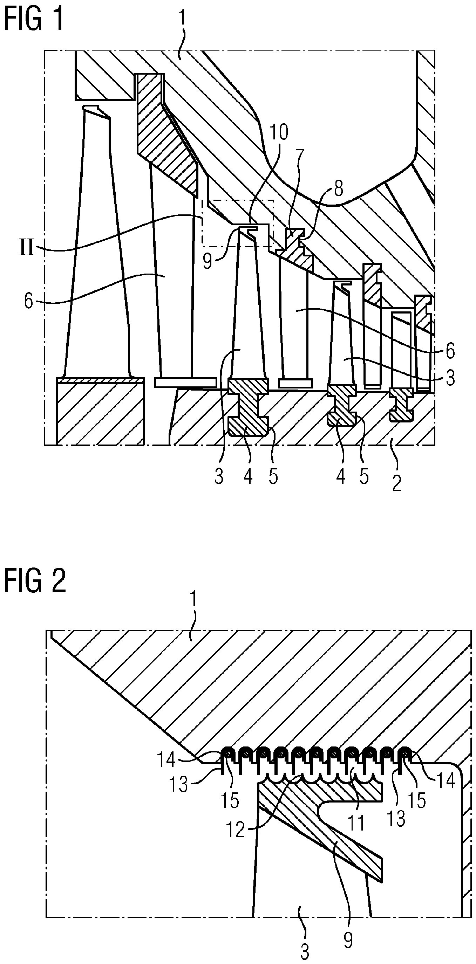

Die Figur 1 zeigt in rein schematischer Darstellung einen axialen Teilschnitt durch die Niederdruckstufe einer Dampfturbine. Die Dampfturbine umfasst ein Gehäuse 1, das in üblicher Weise unter Bildung einer Teilfuge in eine obere und untere Hälfte unterteilt ist, und in dem in an sich bekannter Weise ein um seine zentrale Längsachse drehbar gelagerter Rotor 2 angeordnet ist. Der Rotor 2 ist mit mehreren axial beabstandeten Laufschaufelstufen bestückt, von denen jede eine Vielzahl von in Umfangsrichtung äquidistant beabstandeten Laufschaufeln 3 umfasst. Zur Befestigung der Laufschaufeln 3 an dem Rotor 2 sind - mit Ausnahme der ersten, in der Figur 1 ganz links befindlichen Laufschaufel 3 - die Laufschaufelfüße 4 in korrespondierend geformte Befestigungsnuten 5 eingesetzt. Zwischen zwei benachbarten Laufschaufelstufen befindet sich jeweils eine Leitschaufelstufe der Turbine, die in analoger Weise eine Vielzahl von in Umfangsrichtung äquidistant beabstandeten Leitschaufeln 6 umfasst. Die Leitschaufeln 6 sind - ebenfalls mit Ausnahme der ersten Leitschaufel 6 - direkt an dem Gehäuse 1 befestigt, indem ihre Schaufelfüße 7 in korrespondierend ausgebildete Befestigungsnuten 8 eingeschoben sind. Zwischen den Spitzen 9 der Laufschaufeln 3 jeder Laufschaufelstufe und dem den Laufschaufelspitzen 9 radial gegenüberliegenden ringförmigen Wandungsabschnitt 10 wird jeweils ein Ringspalt 11 gebildet. Zur Abdichtung der Ringspalte 11 der Laufschaufelstufen kommen bei der dargestellten Dampfturbine Spitze-Spitze-Dichtungen zum Einsatz. Diese umfassen von den Laufschaufelspitzen 9 radial abragende Schneiden 12 sowie von den ringförmigen Wandungsabschnitten 10 radial nach innen ragende Dichtbänder 13. Die Schneiden und Dichtbänder 1 sind in der Figur 1 nicht zu erkennen, können jedoch der Figur 2 entnommen werden, die eine vergrößerte Darstellung eines Ausschnitts aus Figur 1 zeigt. Die Schneiden 12 sind an die Laufschaufelspitzen 9 unmittelbar angeformt und bilden somit einen integralen Bestandteil dieser. Bei den Dichtbändern 13 handelt es sich um Metallstreifen, die befestigt sind, indem ihre in Figur 2 nach oben zeigenden, L-förmig umgebogen Enden in in dem Gehäuse 1 vorgesehene Dichtbandnuten 14 eingesetzt und mittels Stemmdrähten 15 in diesen fixiert sind.

Insbesondere bei Einsatz von nicht erosions-korrosions-beständigem Stahl in Verbindung mit erhöhter Dampfnässe können die mit den Stemmdrähten 15 befestigten Dichtbänder 13 aus den Dichtbandnuten 14 gelöst werden. Eine Wiederherstellung der ursprünglichen Abdichtung der Ringkanäle 11 stellt sich in diesem Falle schwierig dar, insbesondere, da erodierte Dichtbandnuten 14 aufgrund von Fehlmaterial in der Regel nicht neu bebändert werden können.

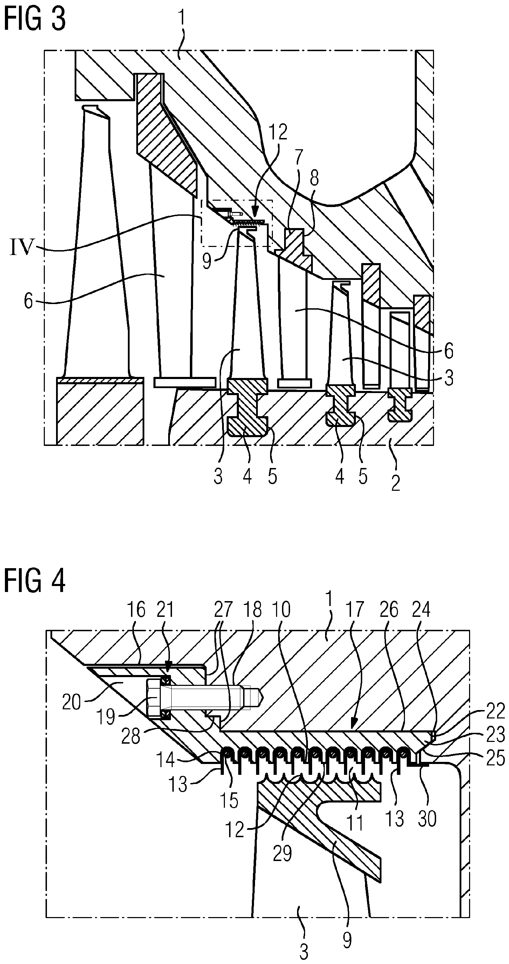

Eine erneute Abdichtung eines Ringspaltes bei Vorliegen von erodierten Dichtbandnuten 14 kann unter Durchführung des erfindungsgemäßen Verfahrens erfolgen. Hierzu wird unter Anwendung eines materialabtragenden Verfahrens zunächst eine zu dem Rotor 2 koaxiale und den Spitzen 9 der Laufschaufeln 3 gegenüberliegende ringförmige Vertiefung 16 in dem Gehäuse 1 hergestellt, welche denjenigen Bereich, in dem Beschädigungen - vorliegend an den Dichtbandnuten 14 - vorlagen, vollständig einschließt. Dabei wird, wie insbesondere in der Figur 4 erkennbar, eine im Axialschnitt in etwa L-förmige Vertiefung 16 hergestellt. Die Vertiefung 16 wird in demjenigen Bereich des Gehäuses 1 hergestellt, in dem eine stufenartige Veränderung des Innendurchmessers des Gehäuses 1 vorliegt.

In die Vertiefung 16 wird erfindungsgemäß ein ebenfalls im Axialschnitt in etwa L-förmiger Einsatzring 17, an welchem Dichtbänder 13 befestigt sind, eingesetzt, indem er in axialer Richtung in diese eingeschoben wird. Die Figuren zeigen die Vertiefung 16 nur mit darin angeordnetem Einsatzring 17. Da die Vertiefung 16 im Bereich einer stufenartigen Veränderung des Innendurchmessers des Gehäuses 1 hergestellt wurde, ist sie an ihrer in den Figuren nach links weisenden Seite offen ausgebildet und der Einsatzring 17 kann in axialer Richtung von links nach rechts in die Vertiefung 16, die keine einen solchen Einschub verhindernden Hinterschneidungen aufweist, eingeschoben werden.

Der Einsatzring 17 ist aus einem erosionskorrosionsbeständigen Material, konkret X3CrNiMo13-4 gefertigt und nicht durchgehend ausgebildet sondern zu dem Gehäuse 1 korrespondierend geteilt, also unter Bildung einer in den Figuren nicht erkennbaren Teilfuge in genau zwei Ringhälften gleicher Größe. Im Rahmen der Herstellung des Einsatzringes 17 wurde zunächst ein geschlossener Ringrohling gefertigt und dieser in zwei gleich große Hälften unterteilt. Entsprechend dieser Teilung kann in jeder Gehäusehälfte eine Einsatzringhälfte angeordnet und fixiert werden und bei geschlossenem Gehäuse 1 wird ein durchgehender Einsatzring 16 erhalten.

Nach der Fertigstellung der Vertiefung 16 wird eine Mehrzahl von axialen Gewindebohrungen 18 in dem Gehäuse 1 vorgesehen, die vorliegend auf einem zu dem Rotor 2 koaxialen Kreis angeordnet sind und in die Vertiefung 16 münden. Die Fixierung des Einsatzringes 16 in der Vertiefung 17 wird mittels einer Mehrzahl von axial orientierten Schrauben 19 erreicht, die in in Umfangsrichtung äquidistant beabstandete, mit den Gewindebohrungen 18 fluchtende axiale Durchgangsbohrungen 20 in dem Einsatzring 17 eingesetzt und in die Gewindebohrungen 18 eingeschraubt werden. Die Schrauben 19 sind somit außerhalb des unmittelbar beströmten Bereiches angeordnet und geschützt. Sie sind vorliegend ferner jeweils mit einer Sicherungseinrichtung gegen ein Herausdrehen gesichert, die durch ein Paar von aufeinanderliegenden Keilscheiben 21, die in der Figur 4 nur rein schematisch angedeutet sind, gebildet wird.

Für eine besonders gute Befestigung des Einsatzringes 17 und einen besonders dichten Sitz, der ein Hinterströmen des Einsatzringes 17 zuverlässig vermeidet, weist der Einsatzring 17 an seiner in den Figuren nach rechts weisenden Stirnseite 22 einen konischen Dichtabschnitt 23 auf, der sich in Richtung des rechten axialen Endes des Einsatzringes 17 hin verjüngt. Der Vertiefung 16 weist entsprechend einen mit Spiel korrespondierend geformten Aufnahmeabschnitt 24 auf, der vorliegend durch den in den Figuren rechts liegenden axialen Endbereich der Vertiefung 16 gebildet wird. Der Aufnahmeabschnitt überschreitet, wie in der Figur 4 erkennbar, die Abmessungen des konischen Dichtabschnitts 23 derart, dass dessen Stirnseite 22 nicht an der stirnseitigen Wandung des Aufnahmeabschnitts 24 zur Anlage kommen kann.

Die erfindungsgemäße axiale Fixierung in Verbindung mit dem konischen Sitz erlaubt einerseits eine besonders zuverlässige Verspannung des Einsatzringes 17 auf ganzer Länge und Breite. Über die geneigte Fläche des konischen Dichtabschnitts 23 wird ferner eine definierte, besonders zuverlässige Abdichtung erreicht. Wenn der konische Dichtabschnitt 23 infolge der axialen Verspannung mittels der Schrauben 19 in den Aufnahmebereich 24 der Vertiefung 16 geschoben wird, wird er aufgrund der geneigten Fläche auch in radialer Richtung gegen die obere Wandung des Aufnahmebereichs 24 gedrückt und es wird eine besonders gute Dichtung sowohl im Bereich der konischen Dichtfläche 25 als auch dem dieser radial gegenüberliegenden, mantelseitigen Wandungsabschnitt 26 erzielt. Eine Hinterströmung des Einsatzringes 17 wird im Ergebnis besonders zuverlässig vermieden.

Damit der konische Dichtabschnitt 23 infolge der axialen Verspannung mittels der Schrauben 19 in den zugehörigen Aufnahmeabschnitt 24 dichtend schiebbar ist, sind die Kontur der Vertiefung 16 und des Einsatzringes 17 derart aufeinander abgestimmt, dass für die verbleibenden nach links weisenden stirnseitigen Wandungsabschnitten 27 des Einsatzringes 17 ein ausreichendes, definiertes Spiel zur Verfügung steht. Für den Fall, dass trotz der hervorragenden Dichtung Nassdampf in den Bereich hinter dem Einsatzring 17 einströmen sollte, weist die hintere Kontur des Einsatzringes 17 eine ein Strömungshindernis darstellende Stufe 28 auf.

Da die die Durchgangsbohrungen 20 nahe des in den Figuren linken axialen Endes des Einsatzringes 17 vorgesehen sind und der konische Dichtabschnitt 23 den gegenüberliegenden, rechten axialen Endbereich des Einsatzringes 17 bildet, wird eine besonders zuverlässige Verspannung des Einsatzringes 17 über seine gesamte Länge und Breite erzielt.

Von der inneren Mantelfläche 29 des Einsatzringes 17 ragen bei dem dargestellten Ausführungsbeispiel insgesamt elf Dichtbänder 13 radial nach innen ab, die - genau wie im Ausgangszustand der zu reparierenden Turbine - in Dichtbandnuten 14 mittels Stemmdrähten 15 befestigt sind. Die Anzahl der Dichtbänder 13 entspricht der vor der Reparatur vorhandenen Anzahl. Das in den Figuren ganz rechte Dichtband hat einen umgebogenen, als Schutzband 30 dienenden Abschnitt, der den Übergang vom Einsatzring 17 zu der Vertiefung 16 abdeckt, um Hinterströmungen noch besser vorzubeugen.

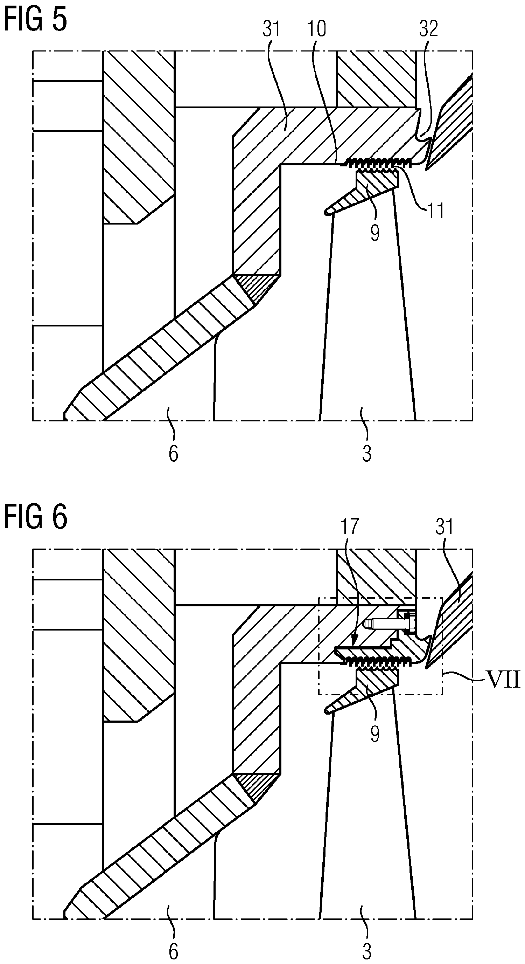

Die Figuren 5 bis 7 zeigen schematische Axialteilschnittdarstellungen einer weiteren Dampfturbine, bei welcher ein Ringspalt 11 einer Laufschaufelstufe unter Durchführung der vorstehend beschriebenen Ausführungsform des erfindungsgemäßen Verfahrens saniert wurde. Gleiche Bauteile sind mit gleichen Bezugsziffern versehen.

Der Unterschied zwischen der in den Figuren 1 bis 4 dargestellten Dampfturbine und derjenigen aus diesen Figuren besteht hauptsächlich darin, dass deren Leitschaufeln 6 nicht unmittelbar an dem Gehäuse 1 gehalten sind sondern an Leitschaufelkränzen 31, die über weitere Komponenten, also indirekt, an dem Gehäuse 1 befestigt sind. Entsprechend ist die Vertiefung 16 hier nicht in dem Gehäuse 1 sondern einem Leitschaufelkranz 31 hergestellt worden.

Ein weiterer Unterschied ist dadurch gegeben, dass ein alternativ ausgestalteter Einsatzring 17, der mit einer geringeren Anzahl von Dichtbändern 13 versehen ist und an seiner in den Figuren nach rechts weisenden Stirnseite eine sich in Umfangsrichtung erstreckende Entwässerungsrinne 32 aufweist, verwendet wurde. Die Entwässerungsrinne 32 ist vorgesehen, da der für die Herstellung der Vertiefung 16 entfernte Abschnitt des Leitschaufelkranzes 31, wie im Vergleich mit Figur 5 deutlich wird, ebenfalls eine Entwässerungsrinne 32 aufwies, die es zu ersetzen gilt. In der Entwässerungsrinne 32 wird kondensierter Dampf gesammelt und aufgrund der Schwerkraft zu einem zentralen Punkt unterhalb des Rotors 2 geführt, welcher in den Übergangsbereich zwischen zwei benachbarten Leitschaufelkränzen 31 eintritt.

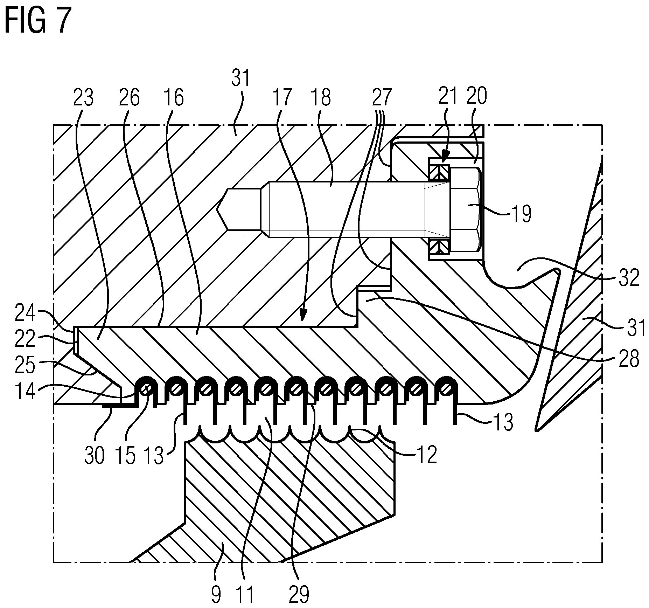

Wie insbesondere der Figur 7 entnehmbar ist, ist der Endbereich des benachbarten Leitschaufelkranzes 31 im Weg. Der benachbarte Leitschaufelkranz 31 wurde daher für die Durchführung des erfindungsgemäßen Verfahrens, insbesondere die Herstellung der Vertiefung 16, der Gewindebohrungen 18 und das axiale Einsetzen des Einsatzringes 17 vorübergehend ausgebaut und nach Beendigung des Verfahrens wieder eingesetzt.

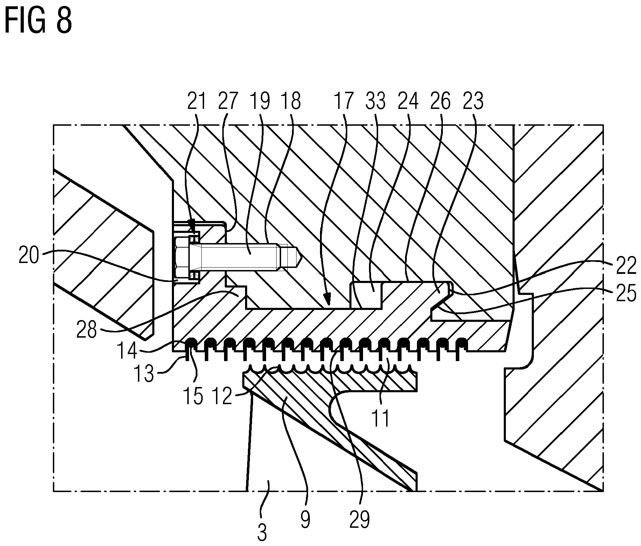

Die Figur 8 zeigt einen schematischen axialen Teilschnitt durch eine dritte Gasturbine, bei welcher ein Ringspalt 11 einer Laufschaufelstufe unter Durchführung der vorstehend beschriebenen Ausführungsform des erfindungsgemäßen Verfahrens saniert wurde. Gleiche Bauteile sind erneut mit gleichen Bezugsziffern versehen.

Die Vertiefung 16 befindet sich hier - wie bei der Dampfturbine aus den Figuren 1 bis 4 - unmittelbar in dem Gehäuse 1. Da die hergestellte Vertiefung 16 jedoch aufgrund der Gehäuseform in dem den Laufschaufelspitzen 9 gegenüberliegenden Bereich sowohl zur rechten als auch zur linken Stirnseite hin offen ist, stünde für den stirnseitigen, konischen Dichtabschnitt 23, wenn er - wie bei den beiden in den Figuren 3 und 4 sowie 6 und 7 dargestellten und vorstehend beschriebenen Einsatzringen 17 den rechten axialen Endbereich des Einsatzringes 17 bilden würde - kein Gehäusematerial für einen zugehörigen Aufnahmeabschnitt 24 zur Verfügung. Daher ist der stirnseitige, konische Dichtabschnitt 23 bei dem hier verwendeten Einsatzring 17 an der äußeren Mantelfläche 33 des Einsatzringes 17 angeformt und in axialer Richtung nach innen, also in der Figur 8 nach links versetzt. Dort steht ausreichen Gehäusematerial für dessen Einfassung zur Verfügung. Der zu dem stirnseitigen, konischen Dichtabschnitt 23 korrespondierende Aufnahmeabschnitt 24 der Vertiefung 16 ist an entsprechender Stelle vorgesehen. Dessen axiale Ausdehnung überschreitet diejenige des konischen Dichtabschnittes 23, so dass der Dichtabschnitt 23 zunächst in radialer Richtung in die in Figur 8 links liegende Hälfte des Aufnahmeabschnittes 24 eingesetzt und der Einsatzring 17 dann in axialer Richtung nach rechts geschoben werden kann, um seine bestimmungsgemäße Position in der Vertiefung 16 gebracht und axial verschraubt werden zu können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang wird nur durch die beigefügten Ansprüche definiert.

## Patentansprüche

1. Verfahren zur Abdichtung eines Ringspaltes (11) in einer Turbine mit einem Gehäuse (1) und einem in dem Gehäuse (1) angeordneten, um seine zentrale Längsachse drehbar gelagerten und mit mehreren Stufen von Laufschaufeln (3) bestückten Rotor (2), bei dem
a) eine ringförmige, zu dem Rotor (2) koaxiale und den Spitzen (9) der Laufschaufeln (3) einer Stufe gegenüberliegende Vertiefung (16) in dem Gehäuse (1) oder in wenigstens einem an dem Gehäuse befestigten Element (31) bereitgestellt wird,
b) ein insbesondere geteilter Einsatzring (17), der derart ausgebildet ist, dass er in die Vertiefung (16) mit Spiel formschlüssig einsetzbar ist, bereitgestellt wird,
c) der Einsatzring (17) in die Vertiefung (16) eingesetzt wird, indem der Einsatzring (17) im Wesentlichen in axialer Richtung in die Vertiefung (16) eingeschoben wird, und
d) der Einsatzring (17) mit Befestigungselementen (19) derart fixiert wird, dass eine zumindest im Wesentlichen axial gerichtete Spannkraft mittels der Befestigungselemente aufgebracht wird, **dadurch gekennzeichnet, dass** ein Einsatzring (17) bereitgestellt wird, der insbesondere stirnseitig einen konischen und insbesondere ringförmigen Dichtabschnitt (23) aufweist, der sich in Richtung eines axialen Endes des Einsatzringes (17) hin verjüngt, und dass eine Vertiefung (16) hergestellt wird, die einen Aufnahmeabschnitt (24) umfasst, dessen Innenkontur an die Außenkontur des Dichtabschnittes (23) des Einsatzringes (17) insbesondere mit Spiel angepasst ist, und ein konischer Sitz erhalten wird.

2. Verfahren nach Anspruch 1,
**dadurch gekennzeichnet, dass**
der Einsatzring (17) mit länglichen Befestigungselementen, insbesondere Schrauben (19) und/oder Gewindestangen und/oder Bolzen fixiert wird, die zumindest im Wesentlichen in axialer Richtung in den Einsatzring (17) eingesetzt werden.

3. Verfahren nach Anspruch 2,
**dadurch gekennzeichnet, dass**
ein Einsatzring (17) bereitgestellt wird, in dem mehrere in Umfangsrichtung beabstandete, zumindest im Wesentlichen axial orientierte Durchgangsbohrungen (20) für je ein längliches Befestigungselement (19) vorgesehen sind, und insbesondere in dem Gehäuse (1) oder wenigstens einen an dem Gehäuse befestigten Element (31) mehrere zumindest im Wesentlichen axial orientierte Gewindebohrungen (18) vorgesehen werden, die derart angeordnet sind, dass sie mit den Durchgangsbohrungen (10) in dem Einsatzring (17) fluchten, wenn der Einsatzring (17) bestimmungsgemäß in die Vertiefung (16) eingesetzt ist.

4. Verfahren nach einem der vorhergehenden Ansprüche,
**dadurch gekennzeichnet, dass**
die Befestigungselemente (19) jeweils mit einer Sicherungseinrichtung, insbesondere wenigstens einer Keilsicherungsscheibe, gesichert werden.

5. Verfahren nach Anspruch 4,
**dadurch gekennzeichnet, dass**
ein Einsatzring (17) bereitgestellt wird, der derart ausgebildet ist, dass der Dichtabschnitt (23) in axialer Richtung beabstandet zu denjenigen Stellen liegt, an denen die Einleitung der Spannkraft über die Befestigungselemente (19) erfolgt.

6. Verfahren nach einem der vorhergehenden Ansprüche,
**dadurch gekennzeichnet, dass**
ein Einsatzring (17) bereitgestellt wird, der im Axialschnitt zumindest in etwa L-förmig ist und einen sich zumindest im Wesentlichen in axialer Richtung erstreckenden, bevorzugt längeren, und einen sich zumindest im Wesentlichen in radialer Richtung erstreckenden, bevorzugt kürzeren Schenkel aufweist.

7. Verfahren nach Anspruch 3 und 6,
**dadurch gekennzeichnet, dass**
die Durchgangsbohrungen (20) in dem einen, bevorzugt in dem sich zumindest im Wesentlichen in radialer Richtung erstreckenden Schenkel vorgesehen sind, und sich insbesondere zumindest im Wesentlichen parallel zu dem anderen Schenkel erstrecken.

8. Verfahren nach Anspruch 6 und 7,
**dadurch gekennzeichnet, dass**
der Dichtabschnitt (23) durch den axialen Endbereich des sich zumindest im Wesentlichen in radialer Richtung erstreckenden Schenkels gebildet wird oder an den sich zumindest im Wesentlichen in radialer Richtung erstreckenden Schenkel, insbesondere an dessen äußere Mantelfläche angeformt ist.

9. Verfahren nach einem der vorhergehenden Ansprüche,
**dadurch gekennzeichnet, dass**
ein Einsatzring (17) bereitgestellt wird, der an seiner im montierten Zustand den Laufschaufelspitzen (9) zugewandten inneren Mantelfläche (29) eine Mehrzahl von Dichtbändern (13) aufweist, die insbesondere in radialer Richtung von dem Einsatzring (17) abragen und/oder sich in Umfangsrichtung des Einsatzringes (17) erstrecken.

10. Verfahren nach einem der vorhergehenden Ansprüche,
**dadurch gekennzeichnet, dass**
ein Einsatzring (17) bereitgestellt wird, der hergestellt wurde, indem zunächst ein eiteiliger Einsatzring-Rohling gefertigt und der einteilige Einsatzring-Rohling unter Bildung wenigstens einer Teilfuge in wenigstens zwei insbesondere gleichgroße Einsatzringteile unterteilt wurde.

11. Verfahren nach Anspruch 10,
**dadurch gekennzeichnet, dass**
der Durchmesser des bereitgestellten Einsatzringes (17) den Durchmesser der hergestellten Vertiefung um einen vorgegebenen Wert überschreitet.

12. Verfahren nach einem der vorhergehenden Ansprüche,
**dadurch gekennzeichnet, dass**
es sich bei dem wenigstens einen an dem Gehäuse (1) befestigten Element um einen Leitschaufelkranz (31) handelt, an welchem bevorzugt sämtliche Leitschaufeln (6) wenigstens einer Leitschaufelstufe der Turbine befestigt sind.

13. Verfahren nach einem der vorhergehenden Ansprüche,
**dadurch gekennzeichnet, dass**
das Verfahren zur Reparatur einer Turbine durchgeführt wird, und in Schritt a) die Vertiefung (16) in dem Gehäuse oder wenigstens einen an dem Gehäuse befestigten Element (31) durch ein materialabtragendes Verfahren hergestellt wird, und sich die hergestellte Vertiefung (16) über einen Bereich in dem Gehäuse (1) oder wenigstens einen an dem Gehäuse befestigten Element (31) erstreckt, an dem vor der Materialentfernung Beschädigungen vorlagen.

14. Turbine
umfassend wenigstens einen Ringspalt, der unter Durchführung des Verfahrens nach einem der vorhergehenden Ansprüche abgedichtet wurde.

## Claims

1. Method for sealing an annular gap (11) in a turbine having a casing (1) and a rotor (2), which is arranged in the casing (1), is mounted so that it can rotate about its central longitudinal axis, and is equipped with a plurality of stages of rotor blades (3), in which method
a) an annular depression (16), coaxial with the rotor (2) and situated opposite the tips (9) of the rotor blades (3) of a stage, is provided in the casing (1) or in at least one element (31) fastened to the casing,
b) an in particular split insert ring (17) is provided which is designed such that it can be inserted into the depression (16) in a form fit with play,
c) the insert ring (17) is inserted into the depression (16) by the insert ring (17) being pushed into the depression (16) substantially in an axial direction, and
d) the insert ring (17) is fixed with fastening elements (19) in such a way that an at least substantially axially directed clamping force is applied by means of the fastening elements, **characterized in that** an insert ring (17) is provided which in particular on the end face has a conical and in particular annular sealing portion (23) which tapers towards an axial end of the insert ring (17), and **in that** a depression (16) is produced which comprises a receiving portion (24), the inner contour of which is adapted to the outer contour of the sealing portion (23) of the insert ring (17), in particular with play, and a conical seat is obtained.

2. Method according to Claim 1,
**characterized in that**
the insert ring (17) is fixed by elongate fastening elements, in particular screws (19) and/or threaded rods and/or bolts, which are inserted at least substantially axially into the insert ring (17).

3. Method according to Claim 2,
**characterized in that**
an insert ring (17) is provided in which a plurality of circumferentially spaced, at least substantially axially oriented through-bores (20) are provided for each elongate fastening element (19), and a plurality of at least substantially axially oriented threaded bores (18) are provided in particular in the casing (1) or at least one element (31) fastened to the casing which are arranged in such a way that they are in line with the through-bores (10) in the insert ring (17) when the insert ring (17) is inserted properly in the depression (16) .

4. Method according to one of the preceding claims,
**characterized in that**
the fastening elements (19) are each secured with a locking means, in particular at least one wedge lock washer.

5. Method according to Claim 4,
**characterized in that**
an insert ring (17) is provided which is designed in such a way that the sealing portion (23) is axially spaced from those points at which the clamping force is introduced via the fastening elements (19).

6. Method according to one of the preceding claims,
**characterized in that**
an insert ring (17) is provided which is at least approximately L-shaped in axial section and has a preferably longer limb which extends at least substantially axially and a preferably shorter limb which extends at least substantially radially.

7. Method according to Claim 3 and 6,
**characterized in that**
the through-bores (20) are provided in the one limb, preferably in the limb which extends at least substantially radially, and extend in particular at least substantially parallel to the other limb.

8. Method according to Claim 6 and 7,
**characterized in that**
the sealing portion (23) is formed by the axial end region of the limb which extends at least substantially radially or is integrally formed with the limb, in particular with its outer lateral surface, which extends at least substantially radially.

9. Method according to one of the preceding claims,
**characterized in that**
an insert ring (17) is provided which has, on its inner lateral surface (29) facing the rotor blade tips (9) in the assembled state, a plurality of sealing strips (13) which project in particular radially from the insert ring (17) and/or extend in the circumferential direction of the insert ring (17).

10. Method according to one of the preceding claims,
**characterized in that**
an insert ring (17) is provided which has been produced in that firstly a single-part insert ring blank was manufactured and the single-part insert ring blank was split into at least two insert ring parts which are in particular of the same size, forming at least one split joint.

11. Method according to Claim 10,
**characterized in that**
the diameter of the insert ring (17) provided exceeds the diameter of the depression produced by a predetermined value.

12. Method according to one of the preceding claims,
**characterized in that**
the at least one element fastened to the casing (1) is a guide vane ring (31) to which preferably all the guide vanes (6) of at least one guide vane stage of the turbine are fastened.

13. Method according to one of the preceding claims,
**characterized in that**
the method is carried out to repair a turbine, and in step a) the depression (16) in the casing or at least an element (31) fastened to the casing is produced using a material-removing method, and the depression (16) produced extends over a region in the casing (1) or at least an element (31) which is fastened to the casing and on which damage was present prior to the removal of material.

14. Turbine
comprising at least one annular gap which has been sealed by carrying out the method according to one of the preceding claims.

## Revendications

1. Procédé permettant de fermer de manière étanche un interstice (11) annulaire dans une turbine ayant une enveloppe (1) et un rotor (2) disposé dans l'enveloppe (1), monté tournant autour de son axe longitudinal central et équipé de plusieurs étages d'aubes (3) mobiles, dans lequel
a) on dispose d'une cavité (16) annulaire, coaxiale au rotor (2) et opposée aux pointes (9) des aubes (3) mobiles d'un étage dans l'enveloppe (1) ou dans au moins un élément (31) fixé à l'enveloppe,
b) on dispose d'un anneau (17) d'insertion, en particulier fendu, qui est constitué de manière à pouvoir être inséré dans la cavité (16) à complémentarité de forme avec jeu,
c) on insère l'anneau (17) d'insertion dans la cavité (16) en introduisant l'anneau (17) d'insertion dans la cavité (16) sensiblement dans la direction axiale et,
d) on fixe l'anneau (17) d'insertion par des éléments (19) de fixation de manière à appliquer au moyen des éléments de fixation une force de serrage dirigée au moins sensiblement axialement, **caractérisé en ce que**
on dispose d'un anneau (17) d'insertion, qui a, en particulier du côté frontal, une partie (23) d'étanchéité conique et en particulier annulaire, qui se rétrécit dans la direction d'une extrémité axiale de l'anneau (17) d'insertion et **en ce que** l'on ménage une cavité (16) qui comprend une partie (24) de réception, dont le contour intérieur est adapté, en particulier avec jeu, au contour extérieur de la partie (23) d'étanchéité de l'anneau (17) d'insertion et on obtient un siège conique.

2. Procédé suivant la revendication 1,
**caractérisé en ce que** l'
on fixe l'anneau (17) d'insertion par des éléments de fixation oblongs, en particulier par des vis (19) et/ou des tiges filetées et/ou des boulons, qui sont insérés dans l'anneau (17) d'insertion au moins sensiblement dans la direction axiale.

3. Procédé suivant la revendication 2,
**caractérisé en ce que**
l'on dispose d'un anneau (17) d'insertion, dans lequel sont prévus, pour respectivement un élément (19) de fixation oblong, plusieurs trous (20) traversant à distance dans la direction du pourtour et orientés au moins sensiblement axialement, et en particulier dans l'enveloppe (1) ou au moins dans un élément (31) fixé à l'enveloppe, il est prévu plusieurs trous (18) traversant orientés au moins sensiblement axialement, qui sont disposés de manière à être alignés avec les trous (10) traversant dans l'anneau (17) d'insertion, lorsque l'anneau (17) d'insertion est inséré conformément aux prescriptions dans la cavité (16).

4. Procédé suivant l'une des revendications précédentes,
**caractérisé en ce que** les éléments (19) de fixation sont arrêtés par un dispositif d'arrêt, en particulier par une rondelle de coincement.

5. Procédé suivant la revendication 4,
**caractérisé en ce que** l'
on dispose d'un anneau (17) d'insertion, qui est constitué de manière à ce que la partie (23) d'étanchéité se trouve aux points à distance dans la direction axiale où l'application de la force de serrage a lieu par les éléments (19) de fixation.

6. Procédé suivant l'une des revendications précédentes,
**caractérisé en ce que** l'
on dispose d'un anneau (17) d'insertion, qui, en coupe axiale, est au moins à peu près en forme de L et a une branche, de préférence plus longue, s'étendant au moins sensiblement dans la direction axiale et une branche, de préférence plus courte, s'étendant au moins sensiblement dans la direction radiale.

7. Procédé suivant les revendications 3 et 6,
**caractérisé en ce que**
les trous (20) traversant sont prévus dans la branche s'étendant de préférence dans la direction au moins sensiblement radiale et s'étendent en particulier au moins sensiblement parallèlement à l'autre branche.

8. Procédé suivant les revendications 6 et 7,
**caractérisé en ce que**
la partie (23) d'étanchéité est formée par la partie d'extrémité axiale de la branche s'étendant au moins sensiblement dans la direction radiale où est formée sur la branche s'étendant au moins sensiblement dans la direction radiale, en particulier sur sa surface latérale extérieure.

9. Procédé suivant l'une des revendications précédentes,
**caractérisé en ce que** l'
on dispose d'un anneau (17) d'insertion, qui a sur sa surface (29) latérale intérieure, tournée à l'état monté vers les pointes (9) d'aubes mobiles, une pluralité de bandes (13) d'étanchéité, qui partent de l'anneau (17) d'étanchéité, en particulier dans la direction radiale, et/ou qui s'étendent dans la direction du pourtour de l'anneau (17) d'insertion.

10. Procédé suivant l'une des revendications précédentes,
**caractérisé en ce que** l'
on dispose d'un anneau (17) d'insertion, qui a été fabriqué en fabriquant d'abord une ébauche d'anneau d'insertion d'une seule pièce et on a subdivisé l'ébauche d'anneau d'insertion d'une seule pièce, avec formation d'au moins un joint partiel, en au moins deux parties d'anneau d'insertion, en particulier de même dimension.

11. Procédé suivant la revendication 10,
**caractérisé en ce que**
le diamètre de l'anneau (17) d'insertion, dont on dispose, dépasse le diamètre de la cavité ménagée d'une valeur donnée à l'avance.

12. Procédé suivant l'une des revendications précédentes,
**caractérisé en ce que**
le au moins un élément fixé à l'enveloppe (1) est une couronne (31) d'aubes directrices à laquelle sont fixés de préférence l'ensemble des aubes (6) directrices d'au moins un étage d'aubes directrices de la turbine.

13. Procédé suivant l'une des revendications précédentes,
**caractérisé en ce que** l'
on effectue le procédé pour la réparation d'une turbine et dans le stade a) on ménage par un procédé avec enlèvement de matière la cavité (16) dans l'enveloppe ou au moins dans un élément (31) fixé à l'enveloppe et la cavité (16) ménagée s'étend sur une partie dans l'enveloppe (1) ou du moins, sur un élément (31) fixé à l'enveloppe, sur lequel il y avait des dommages avant l'enlèvement de matière.

14. Turbine comprenant au moins un interstice annulaire, qui a été rendu étanche en effectuant le procédé suivant l'une des revendications précédentes.
